# EUROPEAN PATENT APPLICATION

(11) **EP 2 786 652 A1**
(43) Date of publication of application: **08.10.2014**
(21) Application number: 14160863.8
(22) Date of filing: 20.03.2014
(51) Int. Cl.: A01F 15/07, A01D 46/08

(54) **Round module builder and method for forming a round module**

(30) Priority: 27.03.2013 US 201313851386
(71) Applicant: Deere & Company, Moline, IL 61265-8098 (US)
(72) Inventor: Wigdahl, Jeffrey S, Ames, Iowa 50014 (US); Ackerman, Nile T, Clive, Iowa 50325 (US); Cracraft, Mark A, Johnston, Iowa 50131 (US); Vanlaningham, Nichol, Bondurant, Iowa 50035 (US); Weber, Scott D, Bondurant, Iowa 50035 (US)
(74) Representative: Holst, Sönke

(57) **Abstract**

A round module builder for forming a round module (100) is proposed. The round module builder (80) for forming a round module (100) comprising an outer circumference (105), a first end (110), a first edge (120) adjacent the outer circumference (105) and the first end (110), a second end (115), and a second edge (125) adjacent the outer circumference (105) and the second end (115), the round module builder (80) comprising: a first module-forming portion (85) configured to receive a crop; a second module-forming portion (90) pivotally coupleable to the first module-forming portion (85), the first module-forming portion (85) and the second module-forming portion (90) configured to rotate the crop into the round module (100); a wrapping device (175) coupleable to at least one of the first module-forming portion (85) and the second module-forming portion (90), the wrapping device (175) configured to position a wrap (180) onto the outer circumference (105), the first edge (120), and the second edge (125) of the round module (100). In order to facilitate accurate wrapping of the round module it is proposed that the round module builder further comprising: a wrap indication device (310) coupleable to at least one of the first module-forming portion (85) and the second module-forming portion (90), the wrap indication device (310) configured to measure an indication of the wrap (180) on at least one of the first edge (120) and the second edge (125) of the round module (100). A respective method is proposed.

## Description

The present disclosure generally relates to a round module builder for forming a round module comprising an outer circumference, a first end, a first edge adjacent the outer circumference and the first end, a second end, and a second edge adjacent the outer circumference and the second end, the round module builder comprising: a first module-forming portion configured to receive a crop; a second module-forming portion pivotally coupleable to the first module-forming portion, the first module-forming portion and the second module-forming portion configured to rotate the crop into the round module; a wrapping device coupleable to at least one of the first module-forming portion and the second module-forming portion, the wrapping device configured to position a wrap onto the outer circumference, the first edge, and the second edge of the round module. Further a method for forming a round module is proposed.

Round module builders are known in the prior art and commonly in use for crop harvesting like cotton, where the harvested cotton is formed to a round bale. The Round module builder may further comprise a wrapping device for wrapping the bale in order to hold it in a round shape with appropriate compaction and for protection when laying on the field. In order to determine whether a round module has been wrapped, an operator can visually inspect the round module before the round module is ejected by a round module builder in order to see if the wrapping has been performed accurately. This is time consuming and ineffective.

It is therefore one object of the invention to minimize the efforts for the operator for inspection of the accurate wrapping of the round module.

The object will be achieved by the teaching of independent claims 1 and 10. Advantageous solutions will be described in the subclaims.

Accordingly a round module builder of the above mentioned type is proposed comprising: a wrap indication device coupleable to at least one of the first module-forming portion and the second module-forming portion, the wrap indication device configured to measure an indication of the wrap on at least one of the first edge and the second edge of the round module. Further, a method for forming a round module is proposed comprising: initiating a wrapping device to position a wrap onto the outer circumference, the first edge, and the second edge of the round module; and providing a wrap indication device to measure an indication of the wrap on at least one of the first edge and the second edge of the round module.

In one embodiment, a round module builder for forming a round module is disclosed. The round module comprises an outer circumference, a first end, a first edge adjacent the outer circumference and the first end, a second end, and a second edge adjacent the outer circumference and the second end. The round module builder comprises a first module-forming portion configured to receive a crop. A second module-forming portion is pivotally coupleable to the first module-forming portion. The first module-forming portion and the second module-forming portion are configured to rotate the crop into the round module. A wrapping device is coupleable to at least one of the first module-forming portion and the second module-forming portion. The wrapping device is configured to position a wrap onto the outer circumference, the first edge, and the second edge of the round module. A wrap indication device is coupleable to at least one of the first module-forming portion and the second module-forming portion. The wrap indication device is configured to measure an indication of the wrap on at least one of the first edge and the second edge of the round module.

In another embodiment, a round module builder for forming a round module is disclosed. The round module comprises an outer circumference, a first end, and a second end. The round module builder comprises a first module-forming portion configured to receive a crop. A second module-forming portion is pivotally coupleable to the first module-forming portion. The first module-forming portion and the second module-forming portion are configured to rotate the crop into the round module. A wrapping device is coupleable to at least one of the first module-forming portion and the second module-forming portion. The wrapping device is configured to position a wrap onto the outer circumference of the round module. A wrap indication device is coupleable to at least one of the first module-forming portion and the second module-forming portion. The wrap indication device comprises a logic circuitry configured to compare a first pressure reading to a second pressure reading to determine if there has been a change in pressure, which indicates the wrap has been positioned onto the round module. The first pressure reading is of a pressure required to rotate the round module taken before the wrap is positioned. The second pressure reading is of a pressure required to rotate the round module taken after the wrapping device is initiated.

In yet another embodiment, a method for forming a round module is disclosed. The round module comprises an outer circumference, a first end, a first edge adjacent the outer circumference and the first end, a second end, and a second edge adjacent the outer circumference and the second end. The method comprises providing a first module-forming portion to receive a crop. A second module-forming portion is provided to rotate the crop into the round module. A wrapping device is initiated to position a wrap onto the outer circumference, the first edge, and the second edge of the round module. A wrap indication device is provided to measure an indication of the wrap on at least one of the first edge and the second edge of the round module.

Other features and aspects will become apparent by consideration of the detailed description and accompanying drawings.
FIG. 1 is a side view of a cotton harvester including a round module builder and a round module according to one embodiment.
FIG. 2 is a perspective view of the round module of FIG. 1.
FIG. 3 is a partial view of the round module builder of FIG. 1.
FIG. 4 is a partial view of the round module builder of FIG. 1.
FIG. 5 is a zoomed in view of a portion of the round module builder of FIG. 1.
FIG. 6 is a partial view of a round module builder of a harvester according to another embodiment.
FIG. 7 is a schematic of the round module builder of FIG. 6.

Before any embodiments are explained in detail, it is to be understood that the disclosure is not limited in its application to the details of construction and the arrangement of components set forth in the following description or illustrated in the following drawings. The disclosure is capable of other embodiments and of being practiced or of being carried out in various ways. Further embodiments of the invention may include any combination of features from one or more dependent claims, and such features may be incorporated, collectively or separately, into any independent claim.

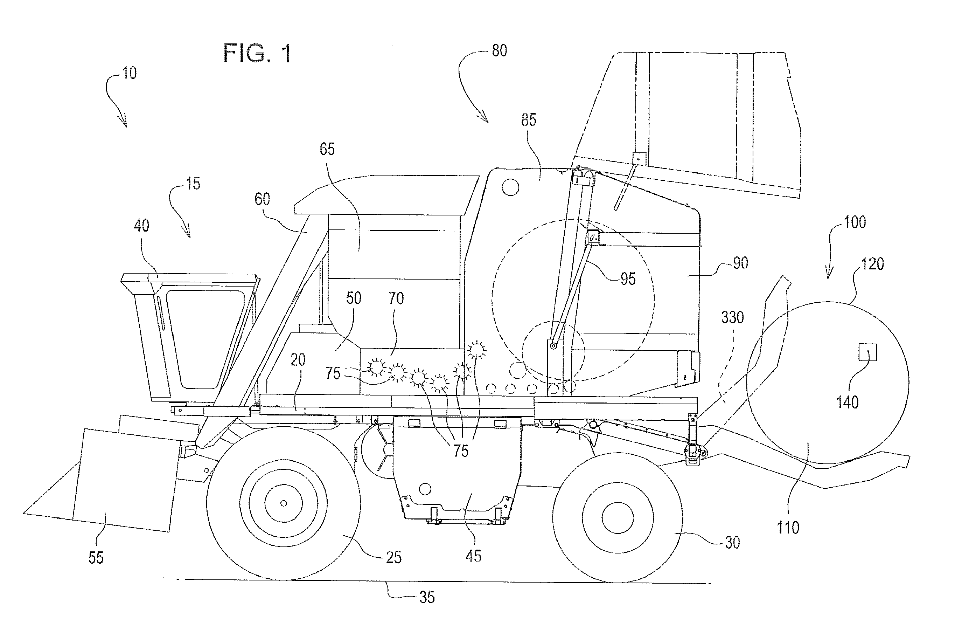

FIG. 1 illustrates a harvester 10 according to one embodiment. The illustrated harvester 10 is a cotton harvester 15. Alternatively, the harvester 10 may be a hay, corn stalk, or other crop harvester.

The harvester 10 includes a chassis 20. The chassis 20 is supported by front wheels 25 and rear wheels 30. The harvester 10 is adapted for movement through a field 35 to harvest cotton, hay, corn stalks, or other crop. An operator station 40 is supported by the chassis 20. A power module 45 may be supported below the chassis 20. Water, lubricant, and fuel tanks, indicated generally at 50, may be supported on the chassis 20.

A harvesting structure 55 is coupleable to the chassis 20. The illustrated harvesting structure 55 is configured to remove cotton from the field 35. Alternatively, the harvesting structure 55 may be configured to remove hay, corn stalks, or other crop. An air duct system 60 is coupleable to the harvesting structure 55. An accumulator 65 is coupleable to the air duct system 60. The accumulator 65 is configured to receive cotton, or other crop, from the harvesting structure 55 via the air duct system 60. A feeder 70 is coupleable to the chassis 20. The feeder 70 is configured to receive cotton, or other crop, from the accumulator 65. The feeder 70 includes a plurality of rollers 75 configured to compress the cotton, or other crop, and transfer the cotton, or other crop, to a round module builder 80.

The illustrated round module builder 80 includes a first module-forming portion 85 in communication with the feeder 70 for receiving the crop therefrom. A second module-forming portion 90 is pivotally coupleable to the first module-forming portion 85. An extendable and retractable cylinder 95 is coupleable to the second module-forming portion 90. The extendable and retractable cylinder 95 is configured to pivot the second module-forming portion 90 relative to the first module-forming portion 85. The first and second module forming portions 85, 90 of the round module builder 80 are configured to form a round module or bale 100 of cotton or other crop.

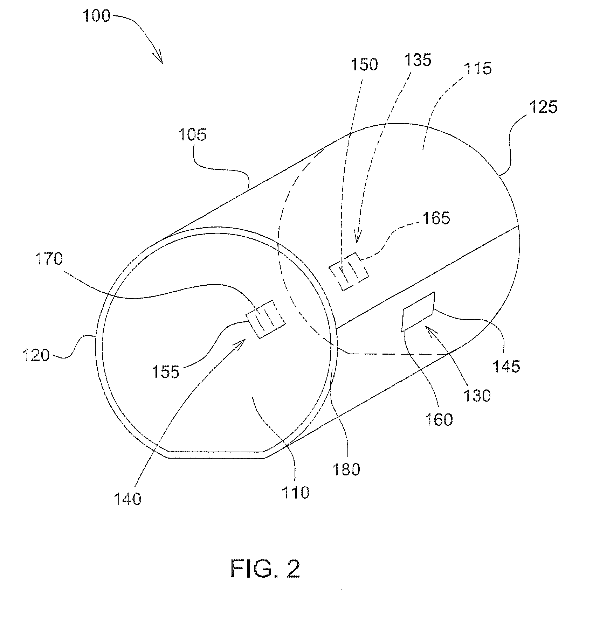

Referring to FIG. 2, the round module 100 includes an outer circumference 105, a first end 110, and a second end 115. A first edge 120 is adjacent the outer circumference 105 and the first end 110. A second edge 125 is adjacent the outer circumference 105 and the second end 115.

A first identification tag 130 may be coupled to the outer circumference 105 of the round module 100. A second identification tag 135 may be coupled to the second end 115 of the round module 100. A third identification tag 140 may be coupled to the first end 110 of the round module 100. The first, second, and third identification tags 130, 135, 140 may be a first, a second, and a third electronic tags 145, 150, 155, respectively. Exemplarily, the electronic tags 145, 150, 155 may be a first, a second, and a third radio frequency identification "RFID" tags 160, 165, 170, respectively. The first, second, and third RFID tags 160, 165, 170 may be active tags that include an internal power source or passive tags that are energized by a field created by an RFID reader.

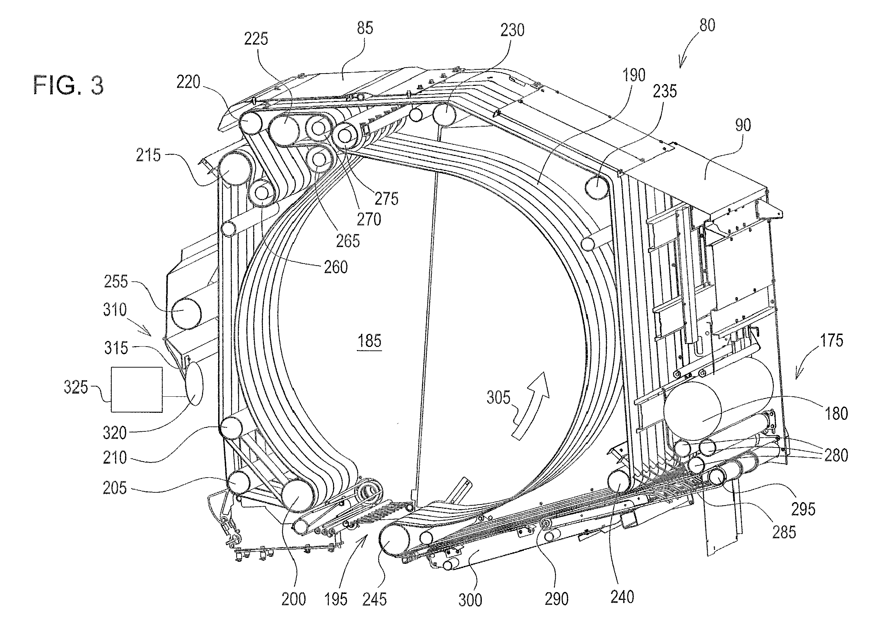

With reference to FIG. 3, a wrapping device 175 is coupleable to at least one of the first module-forming portion 85 and the second module-forming portion 90. The wrapping device 175 is configured to position a wrap 180 onto the outer circumference 105 (FIG. 2) of the round module 100. Alternatively, the wrapping device 175 may also position the wrap 180 around the first edge 120 and the second edge 125 of the round module 100. The wrap 180 is placed onto the round module 100 in a module-forming chamber 185 of the round module builder 80.

The module-forming chamber 185 is similar to the module-forming chamber disclosed in commonly assigned U.S. Pat. No. 8,087,216, which is hereby incorporated by reference. A plurality of endless belts 190 define the circumference of the module-forming chamber 185. The plurality of endless belts 190 are supported in a side-by-side relationship across a support roll arrangement comprising a plurality of fixed rolls and a plurality of movable rolls. Specifically, proceeding clockwise from a chamber inlet 195 where crop enters the module-forming chamber 185, the fixed rolls include a lower drive roll 200, a first separation roll 205, a second separation roll 210, an upper drive roll 215, an upper front frame roll 220, an upper rear frame roll 225, an upper front gate roll 230, an upper rear gate roll 235, a lower rear gate roll 240, and a lower front gate roll 245 all coupled for rotation within the round module builder 80.

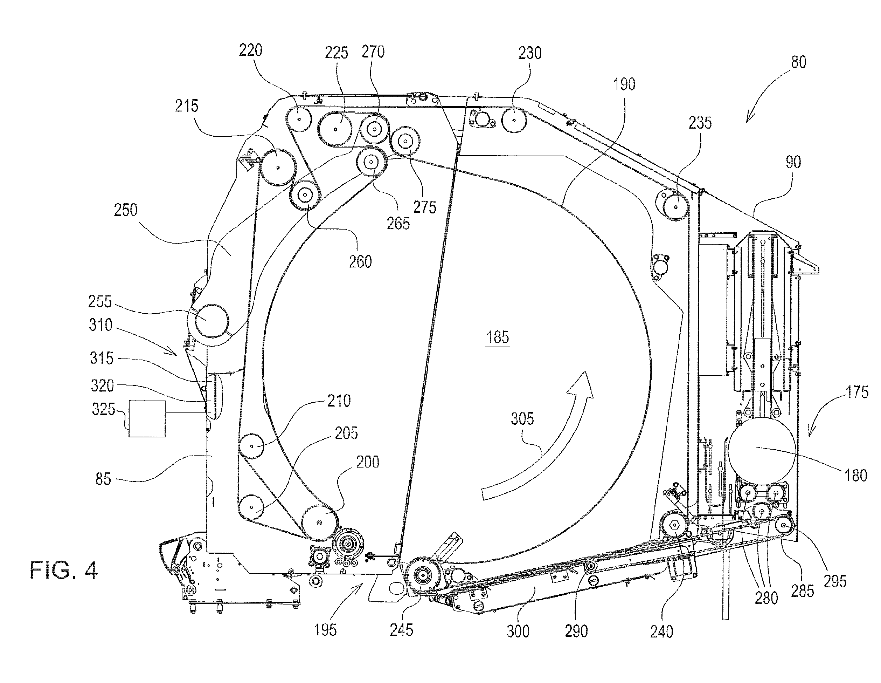

Referring to FIG. 4, a pair of transversely-spaced belt tensioning arms 250 are pivotally mounted to a belt tensioning arm pivot 255. With reference to FIGS. 3 and 4, the plurality of movable rolls comprise a first movable roll 260, a second movable roll 265, a third movable roll 270, and a fourth movable roll 275, which extend between and have opposite ends, respectively, rotatably coupled to the transversely-spaced belt tensioning arms 250. As illustrated, one or more of the fixed rolls are driven so as to cause the plurality of endless belts 190 to be driven, with the drive direction being such as to cause the incoming cotton, or other crop, to travel counterclockwise as it is added as a spiral layer to the growing round module 100. As the round module 100 grows within the module-forming chamber 185, the transversely-spaced belt tensioning arms 250 rotate counterclockwise until a round module 100 having a predetermined diameter has been formed in the module-forming chamber 185. Then the wrap 180 is applied to the round module 100 via the wrapping device 175.

The wrapping device 175 comprises a plurality of rubber wrap rolls 280 that guide the wrap 180. A belt 285 is positioned over a pulley 290 and driven by a rear power shaft 295. When driven, the belt 285 leads the wrap 180 along a wrap guide structure 300 and into the module-forming chamber 185, by way of the inlet 195, where the wrap 180 is positioned onto the round module 100 in the direction of the arrow 305.

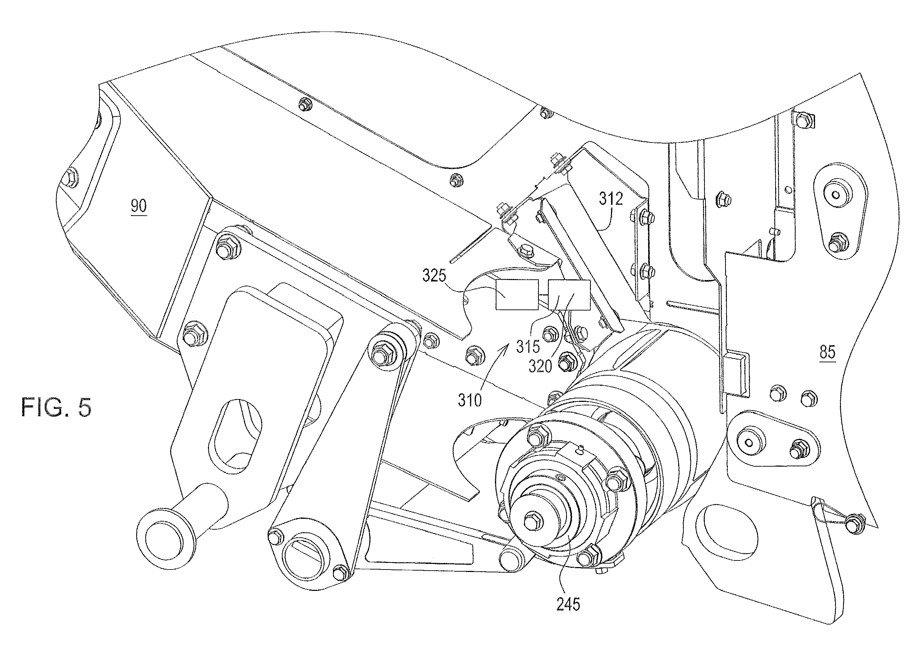

With continued reference to FIGS. 3 and 4, a wrap indication device 310 is coupled to the first module-forming portion 85. Alternatively, the wrap indication device 310 may be coupled to the second module-forming portion 90 (FIG. 5) adjacent a wrap slot 312. The wrap indication device 310 is configured to measure an indication of the wrap 180 on at least one of the first edge 120 and the second edge 125 of the round module 100. The wrap indication device 310 may be a sonic sensor 315 or a visual device 320.

Referring to FIGS. 3-5, an alarm 325 may be in communication with the wrap indication device 310. The alarm 325 may be configured to indicate whether the wrap 180 is on at least one of the first edge 120 and the second edge 125 of the round module 100.

Referring to FIG. 1, a module handling system 330 is positioned adjacent the round module builder 80 for receiving the round module 100. The module handling system 330 temporarily supports the round module 100 and then discharges it from the harvester 10.

In operation, the harvester 10 is driven through the field 35 to harvest cotton or other crop. The illustrated harvesting structure 55 doffs cotton from cotton plants in the field 35. Alternatively the harvesting structure 55 may strip the cotton from the cotton plants. Cotton is transferred to the accumulator 65 via the air duct system 60. The accumulator 65 holds the cotton until a predetermined cotton level is reached and then transfers the cotton to the feeder 70. In an exemplary embodiment, the accumulator 65 transfers cotton to the feeder 70 four times for each round module 100 produced. When the feeder 70 receives cotton, the plurality of rollers 75 are activated to compress the cotton. The compressed cotton is transferred to the round module builder 80.

After the round module builder 80 receives compressed cotton, the plurality of endless belts 190 rotate the cotton into the round module 100. After the round module builder 80 receives sufficient cotton from the feeder 70, the wrapping device 175 is initiated. The wrapping device 175 positions the wrap 180 onto the outer circumference 105, the first edge 120, and the second edge 125 of the round module 100. The wrap indication device 310 then measures an indication of the wrap 180 on at least one of the first edge 120 and the second edge 125 of the round module 100. Once the wrap indication device 310 has verified that the wrap 180 is on the round module 100, the second module-forming portion 90 is pivoted relative to the first module-forming portion 85, and the round module 100 can be ejected onto the module handling system 330. The module handling system 330 supports the round module 100 and then discharges it from the harvester 10.

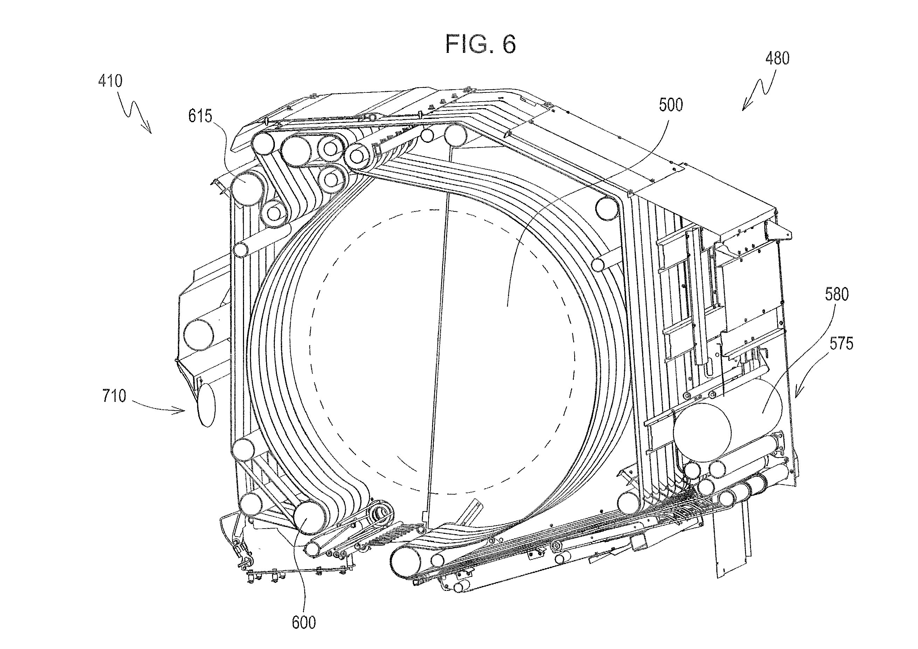

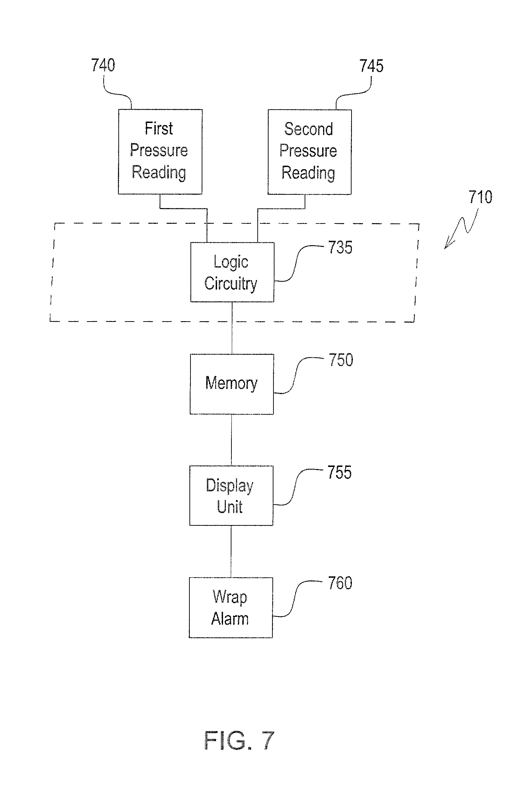

FIGS. 6 and 7 illustrate a round module builder 480 of a harvester 410 according to another embodiment. The harvester 410 includes features similar to the harvester 10 of FIG. 1, and therefore, like components have been given like reference numbers plus 400 and only differences between the harvesters 10 and 410 will be discussed in detail below.

A wrap indication device 710 comprises logic circuitry 735 configured to compare a first pressure reading 740 to a second pressure reading 745. Exemplarily, the first pressure reading 740 is of a pressure required to rotate a round module 500 using a lower drive roll 600 and an upper drive roll 615 taken before a wrap 580 is positioned. Exemplarily, the second pressure reading 745 is of a pressure required to rotate the round module 500 using the lower drive roll 600 and the upper drive roll 615 taken after a wrapping device 575 is initiated. The logic circuitry 735 compares the first and second pressure readings 740, 745 to determine if there has been a change in pressure, which indicates the wrap 580 has been positioned onto the round module 500.

The first and second pressure readings 740, 745 may be stored in memory 750. The first and second pressure readings 740, 745 may be transmitted to a display unit 755. If a wrap 580 is not positioned on the round module 500, a wrap alarm 760 may be initiated. The wrap alarm 760 may be audio, visual, or other types.

Various features are set forth in the following claims.

## Claims

1. A round module builder (80) for forming a round module (100) comprising an outer circumference (105), a first end (110), a first edge (120) adjacent the outer circumference (105) and the first end (110), a second end (115), and a second edge (125) adjacent the outer circumference (105) and the second end (115), the round module builder (80) comprising: a first module-forming portion (85) configured to receive a crop; a second module-forming portion (90) pivotally coupleable to the first module-forming portion (85), the first module-forming portion (85) and the second module-forming portion (90) configured to rotate the crop into the round module (100); a wrapping device (175) coupleable to at least one of the first module-forming portion (85) and the second module-forming portion (90), the wrapping device (175) configured to position a wrap (180) onto the outer circumference (105), the first edge (120), and the second edge (125) of the round module (100); the round module builder further comprising: a wrap indication device (310) coupleable to at least one of the first module-forming portion (85) and the second module-forming portion (90), the wrap indication device (310) configured to measure an indication of the wrap (180) on at least one of the first edge (120) and the second edge (125) of the round module (100).

2. The round module builder (80) of claim 1, further comprising a harvester (10) comprising a harvesting structure (55) configured to remove crop from a field (35), an accumulator (65) in communication with the harvesting structure (55) for receiving crop therefrom, a feeder (70) in communication with the accumulator (65) for receiving crop therefrom, the feeder (70) configured to compress the crop, and the round module builder (80) in communication with the feeder (70) for receiving crop therefrom.

3. The round module builder (80) of claim 1 or 2, wherein the wrap indication device (310) is at least one of a sonic sensor (315) and a visual device (320).

4. The round module builder (80) of one of the claims 1 to 3, wherein the wrap (180) comprises at least one identification tag (130, 135, 140) and the wrap indication device (310) measures an indication of the identification tag (130, 135, 140).

5. The round module builder (80) of one of the claims 1 to 4, wherein the identification tag (130, 135, 140) is an electronic tag (145, 150, 155).

6. The round module builder (80) of one of the claims 1 to 5, wherein the electronic tag (145, 150, 155) is an RFID tag (160, 165, 170).

7. The round module builder (80) of one of the claims 1 to 6, further comprising an alarm (325) configured to indicate whether the wrap (180) is on at least one of the first edge (120) and the second edge (125) of the round module (100).

8. The round module builder (80) of one of the claims 1 to 7, wherein the wrap indication device (175) comprises a logic circuitry (735) configured to compare a first pressure reading (740) of a pressure required to rotate the round module (100), taken before the wrap (180) is positioned, to a second pressure reading (745), taken after the wrapping device (175) is initiated, to determine if there has been a change in pressure, which indicates the wrap (180) has been positioned onto the round module (100).

9. The round module builder (80) of one of the claims 2 to 8, wherein the harvester (10) is a cotton harvester (15).

10. A method for forming a round module (100) comprising an outer circumference (105), a first end (110), a first edge (120) adjacent the outer circumference (105) and the first end (110), a second end (115), and a second edge (125) adjacent the outer circumference (105) and the second end (115), the method comprising: providing a first module-forming portion (85) to receive a crop; providing a second module-forming portion (90) to rotate the crop into the round module (100); initiating a wrapping device (175) to position a wrap (180) onto the outer circumference (105), the first edge (120), and the second edge (125) of the round module (100); and providing a wrap indication device (310) to measure an indication of the wrap (180) on at least one of the first edge (120) and the second edge (125) of the round module (100).

11. The method of claim 10, further comprising providing a harvester (10) to harvest the crop, the harvester (10) comprising a harvesting structure (55) for removing the crop from a field (35), an accumulator (65) for receiving the crop from the harvesting structure (55), a feeder (70) for receiving the crop from the accumulator (65), compressing the crop, and communicating the crop to the first module-forming portion (85).

12. The method of claim 10 or 11, wherein the crop is hay, cotton or corn stalks.

13. The method of one of the claims 10 to 12, further comprising communicating whether the wrap (180) is on the round module (100).

14. The method of one of the claims 10 to 13, wherein the wrap indication device (310) is at least one of a sonic sensor (315) and a visual device (320).

15. The method of one of the claims 10 to 14, further comprising placing at least one identification tag (130, 135, 140) on the wrap (180) and the wrap indication device (310) measuring an indication of the identification tag (130, 135, 140).
